# EUROPEAN PATENT APPLICATION

(11) **EP 4 704 171 A1**
(43) Date of publication of application: **04.03.2026**
(21) Application number: 25199880.3
(22) Date of filing: 03.09.2025
(51) Int. Cl.: H01M 4/133, H01M 4/1391, H01M 4/36, H01M 4/505, H01M 4/62, H01M 10/0525

(54) **CATHODE ACTIVE MATERIAL FOR LITHIUM SECONDARY BATTERY AND METHOD FOR MANUFACTURING THE SAME**

(30) Priority: 03.09.2024 KR 20240119477; 08.07.2025 KR 20250091856
(71) Applicant: SK On Co., Ltd., Seoul 03161 (KR); Seoul National University R&DB Foundation, Seoul 08826 (KR)
(72) Inventor: CHOI, Sung Jun, 34124 Daejeon (KR); LEE, Kyu Tae, 06216 Seoul (KR); SONG, Ga Won, 03904 Seoul (KR)
(74) Representative: Prüfer & Partner mbB Patentanwälte · Rechtsanwälte

(57) **Abstract**

A cathode active material for a lithium secondary battery according to exemplary embodiments includes lithium metal oxide particles and a coating portion attached to a surface of the lithium metal oxide particles through a chemical bond. The coating portion includes a thiol group. The cathode active material for a lithium secondary battery according to exemplary embodiments may suppress the decomposition of the electrolyte, thereby improving the cycle life characteristics of the secondary battery.

## Description

### [BACKGROUND OF THE INVENTION]

### 1. Field of the Invention

The present disclosure relates to a cathode active material for a lithium secondary battery and a method for manufacturing the same. More specifically, the present disclosure relates to a cathode active material for a lithium secondary battery including lithium metal oxide particles and a method for manufacturing the cathode active material.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric cars.

Examples of the secondary battery include a lithium secondary battery, a nickelcadmium battery, and a nickel-hydrogen battery. Among these, lithium secondary batteries are actively being researched and developed due to their high operating voltage, high energy density per unit weight, and advantages in charging speed and weight reduction.

When a secondary battery is composed entirely of solid materials, it may be referred to as an all-solid-state battery. For example, the all-solid-state battery may include an electrode assembly including a cathode, an anode and an electrolyte. In the all-solid-state battery, the electrolyte exists in a solid form, and solid electrolytes include polymer-based solid electrolytes, oxide-based solid electrolytes, and sulfide-based solid electrolytes.

Solid electrolytes possess high energy density, physical stability, and a long calendar life. However, side reactions may occur at the contact interface between the solid electrolyte and the cathode or the anode. To suppress such side reactions, research and development are underway on methods for coating the surfaces of the cathode, the anode, and/or the active materials contained therein. However, problems such as coating unevenness, active material precipitation, and high process costs still persist.

### [SUMMARY OF THE INVENTION]

An object according to embodiments of the present disclosure is to provide a cathode active material for a lithium secondary battery having improved cycle life characteristics.

Another object according to embodiments of the present disclosure is to provide a lithium secondary battery with improved cycle life characteristics.

Still another object according to embodiments of the present disclosure is to provide a method for manufacturing a cathode active material for a lithium secondary battery having improved cycle life characteristics.

A cathode active material for a lithium secondary battery according to exemplary embodiments of the present disclosure includes: lithium metal oxide particles; and a coating portion attached to a surface of the lithium metal oxide particles through a chemical bond and including a thiol group.

According to exemplary embodiments, the chemical bond may include an ester bond.

According to exemplary embodiments, the coating portion may be derived from a thiol compound.

According to exemplary embodiments, the thiol compound may include at least one of thioglycolic acid, mercaptopropionic acid, mercaptobutyric acid, mercaptoundecanoic acid, mercaptosuccinic acid and cysteine.

According to exemplary embodiments, the thiol compound may include a thiol group at one terminal and a carboxyl group at the other terminal.

According to exemplary embodiments, the thiol compound may include a compound represented by Formula 1 below.

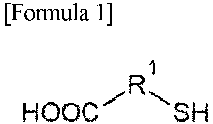

In Formula 1, R¹ is a straight-chain or branched-chain alkylene having 1 to 10 carbon atoms, or a straight-chain or branched-chain alkenylene having 2 to 10 carbon atoms.

According to exemplary embodiments, the coating portion may further include a thiol compound including a carboxyl group.

According to exemplary embodiments, the coating portion may have a thickness of 0.1 nm to 30 nm.

According to exemplary embodiments, the lithium metal oxide particles may include manganese, and the molar ratio of manganese to metal elements excluding lithium and oxygen may be 0.5 or more.

A lithium secondary battery according to exemplary embodiments of the present disclosure includes: a cathode including the cathode active material for a lithium secondary battery according to the above-described embodiments; an anode; and an all-solid-state electrolyte layer disposed between the cathode and the anode.

According to a method for manufacturing a cathode active material for a lithium secondary battery according to exemplary embodiments of the present disclosure, a mixture of lithium metal oxide particles, a thiol compound including a carboxyl group, and an acid is prepared. The mixture is stirred.

According to exemplary embodiments, the mixture may include lithium metal oxide particles including hydroxyl groups formed on their surface.

According to exemplary embodiments, the content of the thiol compound may be 0.1% by weight to 5.0% by weight based on the total weight of the mixture.

According to exemplary embodiments, the content of the acid may be 0.01% by weight to 1.0% by weight based on the total weight of the mixture.

According to exemplary embodiments, the temperature of the step of stirring the mixture may be 200 °C or lower.

The cathode active material according to embodiments of the present disclosure may suppress the decomposition of the electrolyte. This may improve the cycle life characteristics of a secondary battery.

In the method for manufacturing a cathode active material according to embodiments of the present disclosure, a coating portion may be uniformly formed on the surface of the cathode active material, thereby suppressing the decomposition of the solid electrolyte. In addition, the method for manufacturing a cathode active material according to embodiments of the present disclosure may form a uniform coating portion without additional processes such as high-temperature heat treatment or sputtering, thereby improving process efficiency.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a schematic cross-sectional view illustrating a cathode active material according to exemplary embodiments;
FIG. 2 is a schematic cross-sectional view illustrating an electrode assembly according to exemplary embodiments;
FIG. 3 is a schematic plan view illustrating a lithium secondary battery according to exemplary embodiments;
FIG. 4 is a graph showing the results of an FT-IR analysis of cathode active materials according to Example 1 and Comparative Example 1;
FIGS. 5A and 5B respectively show a TEM image and an EDS analysis image according to Example 1;
FIGS. 6A and 6B respectively show a TEM image and an EDS analysis image according to Comparative Example 1;
FIGS. 7A and 7B respectively show a TEM image and an EDS analysis image according to Comparative Example 2;
FIGS. 8A and 8B respectively show a TEM image and an EDS analysis image according to Comparative Example 3;
FIGS. 9A and 9B respectively show a TEM image and an EDS analysis image according to Comparative Example 4; and
FIGS. 10A and 10B respectively show a TEM image and an EDS analysis image according to Comparative Example 5.

### [DETAILED DESCRIPTION OF THE INVENTION]

Examples of the present disclosure provide a cathode active material for a lithium secondary battery (hereinafter, also abbreviated as "cathode active material") including lithium metal oxide particles and a coating portion formed on the surface of the lithium metal oxide particles and including a thiol group. In addition, a cathode for a lithium secondary battery (hereinafter, also abbreviated as "cathode") including the cathode active material for a lithium secondary battery is provided. Further, a lithium secondary battery (hereinafter, also abbreviated as "secondary battery") including the cathode is provided. Furthermore, a method for manufacturing the cathode active material for a lithium secondary battery is provided.

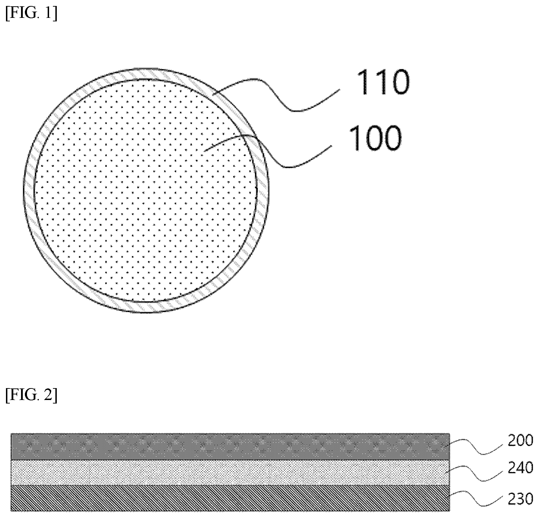

FIG. 1 is a schematic cross-sectional view illustrating a cathode active material according to exemplary embodiments.

Referring to FIG. 1, the cathode active material includes lithium metal oxide particles 100 and a coating portion 110 formed on the lithium metal oxide particles 100.

The cathode active material may include a compound capable of reversibly intercalating and deintercalating lithium ions.

According to exemplary embodiments, the lithium metal oxide particles 100 may include a lithium nickel metal oxide. The lithium nickel metal oxide may further include at least one of cobalt (Co), manganese (Mn) and aluminum (Al).

In some embodiments, the lithium metal oxide particles 100 may include a layered structure or a crystal structure of a compound represented by Formula 2 below.

[Formula 2] LiₓNiₐM_{b}O_{2+z}

In Formula 2, x, a, b and z may satisfy 0.9≤x≤1.2, 0.01≤a≤0.99, 0.01≤b≤0.99, and - 0.5≤z≤0.1. As described above, M may include Co, Mn and/or Al.

The chemical structure represented by Formula 2 indicates a bonding relationship between elements included in the layered structure or crystal structure of the lithium metal oxide particles 100, and does not exclude other additional elements. For example, M includes Co and/or Mn, and Co and Mn may be provided as main active elements of the cathode active material together with Ni. Here, it should be understood that Formula 2 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 2.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity and the rate capability of the cathode active material together with Co or Mn, such as Al.

For example, the lithium-nickel metal oxide may include a layered structure or a crystal structure represented by Formula 2-1 below.

[Formula 2-1] LiₓNiₐM1_{b1}M2_{b2}O_{2+z}

In Formula 2-1, M1 may include Co, Mn and/or Al. M2 may include the above-described auxiliary elements. In Formula 2-1, x, a, b1, b2 and z may satisfy 0.9≤x≤1.2, 0.01≤a≤0.99, 0.01≤b1+b2≤0.99, and -0.5≤z≤0.1.

The lithium metal oxide particles 100 may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or doping element may exist on the surface of the lithium metal oxide particles 100, or may penetrate through the surface of the lithium metal oxide particles 100 to be incorporated into the bonding structure represented by Formula 2 or Formula 2-1.

The lithium metal oxide particles 100 may include a nickel-cobalt-manganese (NCM)-based lithium oxide.

Nickel (Ni) may be provided as a transition metal associated with the capacity of a lithium secondary battery. When a cathode active material having a high nickel content is employed, a high-capacity cathode and a high-capacity lithium secondary battery may be provided.

According to exemplary embodiments, the lithium metal oxide particles 100 may maintain electrical conductivity by including cobalt (Co), and may further improve cycle life stability and capacity retention characteristics through manganese (Mn).

According to exemplary embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

According to exemplary embodiments, the cathode active material may include one or more of a manganese (Mn)-rich active material, or a lithium (Li)-rich layered oxide (LLO)/over-lithiated oxide (OLO)-based active material, and a cobalt (Co)-less active material.

For example, the cathode active material may include a compound represented by Formula 3 below.

[Formula 3] p[Li₂MnO₃]·(1-p)[Li_{q}JO₂]

In Formula 3, p and q may satisfy 0<p<1, and 0.9≤q≤1.2, and J may include at least one element selected from Mn, Ni, Co, Fe, Cr, V, Cu, Zn, Ti, Al, Mg and B.

According to exemplary embodiments, the lithium metal oxide particles 100 may include an over-lithiated oxide (OLO)-based active material. For example, the molar ratio of lithium to the metal elements excluding oxygen in the lithium metal oxide particles 100 may be greater than 1.

According to exemplary embodiments, the lithium metal oxide particles 100 may include an over-lithiated nickel-cobalt-manganese (NCM)-based lithium oxide. For example, the lithium metal oxide particles 100 may include an NCM-based lithium oxide in which the molar ratio of lithium to the metal elements excluding oxygen is 1.1 or more.

In some embodiments, the mole fraction of manganese in the over-lithiated NCM-based lithium oxide (e.g., the mole number of manganese relative to the total moles of nickel, cobalt and manganese) may be 0.5 or more, 0.55 or more, 0.6 or more, or 0.65 or more.

In some embodiments, the mole fraction of manganese in the over-lithiated NCM-based lithium oxide may be 0.5 to 0.9, 0.55 to 0.85, 0.57 to 0.82, 0.60 to 0.80, or 0.65 to 0.75.

Within the above range, the coating portion 110 including a thiol group may be uniformly formed on the lithium metal oxide particles 100.

In some embodiments, the mole fraction of nickel in the over-lithiated NCM-based lithium oxide may be 0.05 to 0.25, 0.07 to 0.22, 0.09 to 0.2, 0.1 to 0.2, or 0.12 to 0.18.

In some embodiments, the mole fraction of cobalt in the over-lithiated NCM-based lithium oxide may be 0.05 to 0.25, 0.07 to 0.22, 0.09 to 0.2, 0.1 to 0.2, or 0.12 to 0.18.

Within the above range, stability may be improved while maintaining high-capacity characteristics and electrical conductivity.

According to exemplary embodiments, the lithium metal oxide particles 100 may include a secondary particle structure including a plurality of primary particles.

For example, the secondary particle may refer to a particle in which a plurality of primary particles are aggregated and are observed or regarded as substantially one particle. For example, in the case of the secondary particles, the boundaries of the primary particles may be observed in SEM cross-sectional images.

For example, the secondary particles may be aggregated with greater than 10, 30 or more, 50 or more, or 100 or more primary particles.

For example, the term "secondary particle" may be used to distinguish it from a single-particle structure. For example, in the case of the single particle, unlike the secondary particle, the boundaries of the primary particles may not be observed in the SEM cross-sectional images.

The lithium metal oxide particles 100 having a secondary particle structure may provide high energy density and high power characteristics.

In some embodiments, the lithium metal oxide particles 100 may include hydroxyl groups on their surface.

For example, during the process of forming the coating portion 110, some unreacted hydroxyl groups that react with the thiol compound described below may remain.

The coating portion 110 may be attached to the surface of the lithium metal oxide particles through a chemical bond. In addition, the coating portion 110 may include a thiol group.

According to exemplary embodiments, the lithium metal oxide particles 100 and the coating portion 110 may be chemically bonded through an ester bond.

For example, a chemical structure including an ester bond may be included as a linker between the lithium metal oxide particles 100 and the coating portion 110. For example, the linker may include a chemical structure represented by -R-C(O)O- (where R is a substituted or unsubstituted hydrocarbon having 1 to 20 carbon atoms).

According to exemplary embodiments, thiol groups may be distributed on the surface of the coating portion 110.

For example, the linker may include a chemical structure represented by -Rₐ-C(O)OR_{b}- (where Rₐ and R_{b} are each a substituted or unsubstituted hydrocarbon having 1 to 20 carbon atoms). In the chemical structure, Rₐ may be oriented toward the lithium metal oxide particles 100, and R_{b} may be oriented outward, where it may be bonded to a thiol group, so that thiol groups may be distributed on the surface of the coating portion 110.

For example, the coating portion 110 may include at least 60% of thiol groups within 50% of its thickness in a straight line from the outermost layer toward the center of the lithium metal oxide particle 100.

The thiol groups located on the surface of the coating portion 110 may form S-S bonds with sulfur elements present in the electrolyte, thereby maintaining a uniform contact state. Furthermore, by suppressing oxygen generation, the cyclic life characteristics at high temperatures and high voltages may be improved.

For example, the high voltage may refer to a voltage of 4.4 V or higher. For example, the high voltage may refer to a voltage of 4.5 V or higher, or 4.6 V or higher.

According to exemplary embodiments, the coating portion 110 may be derived from a thiol compound.

The thiol compound may refer to a compound including a thiol group (-SH). The thiol compound may encompass isomers having the same elements but different chemical structures.

For example, the thiol compound may include: alkanethiols such as methanethiol, ethanethiol, 1-propanethiol, 2-propanethiol, 1-butanethiol, 2-butanethiol or pentanethiol; alkenethiols such as propene-1-thiol, butene-1-thiol or pentene-4-thiol; alkynethiols such as propyne-1-thiol or butyne-1-thiol; or other thiol-containing compounds such as mercapto propyl amine, benzenethiol, benzenedithiol, 2-methylbenzenethiol, 2-ethylbenzenethiol, 4-methoxybenzenethiol, naphthalenethiol, mercaptobenzoic acid, cyclopentanethiol, mercapto benzothiazole, mercaptopurine, mercapto indole, thioacetic acid, thiosalicylic acid, glutathione or cysteine.

According to exemplary embodiments, the thiol compound may include a carboxyl group.

For example, the thiol compound may include: a mercapto alkanoic acid such as thioglycolic acid, mercaptopropionic acid, mercaptobutyric acid or mercaptoundecanoic acid; or an organic acid including a mercapto group such as mercaptosuccinic acid or mercaptolactic acid.

The coating portion 110 may be uniformly formed through a reaction between the carboxyl group of the thiol compound and the hydroxyl group on the surface of the lithium metal oxide particles 100. An ester bond may be formed through a dehydration condensation reaction between the hydroxyl group and the carboxyl group. Accordingly, the coating portion 110 may remain in a stable state, thereby improving the chemical and mechanical stability of the secondary battery.

For example, the thiol compound may include a thiol group and a carboxyl group. As the carboxyl group binds to a hydroxyl group on the surface of the lithium metal oxide particles 100, unreacted thiol groups may be oriented toward the surface of the coating portion 110.

According to exemplary embodiments, the thiol compound may include one or more of thioglycolic acid, mercaptopropionic acid, mercaptobutyric acid, mercaptoundecanoic acid, mercaptosuccinic acid and cysteine.

In some embodiments, the thiol compound may include one or more of thioglycolic acid, mercaptopropionic acid, and mercaptoundecanoic acid.

According to exemplary embodiments, the thiol compound may include a thiol group at one terminal and a carboxyl group at the other terminal. For example, one or more hydrocarbon structures may be present between the thiol group and the carboxyl group of the thiol compound.

The thiol compound having the above-described structure may allow the thickness of the coating portion 110 to be maintained at or above a predetermined range, thereby further improving the effect of suppressing electrolyte decomposition.

In some embodiments, the thiol compound may include a thiol group at one terminal, a carboxyl group at the other terminal, and a hydrocarbon group between the one terminal and the other terminal.

The hydrocarbon group may include a substituted or unsubstituted alkylene group having 1 to 10 carbon atoms, a substituted or unsubstituted alkenylene group having 2 to 10 carbon atoms, and/or a substituted or unsubstituted alkynylene group having 2 to 10 carbon atoms.

Each of the alkylene, alkenylene and alkynylene groups may have a straight-chain or branched-chain structure.

When a portion of the alkylene, alkenylene and alkynylene groups is substituted, it may be substituted with an amine group, a hydroxyl group, a carboxyl group, a halogen group, and/or an alkoxy group.

For example, thioglycolic acid may be understood to include a thiol group at one terminal, a carboxyl group at the other terminal, and a methylene group between the thiol group and the carboxyl group.

For example, cysteine may be understood to include a thiol group at one terminal, a carboxyl group at the other terminal, and an ethylene group between the thiol group and the carboxyl group, with a portion of the ethylene group being substituted with an amine group.

According to exemplary embodiments, the thiol compound may include a compound represented by Formula 1 below.

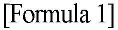

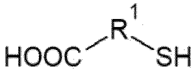

In Formula 1, R¹ may be a straight-chain or branched-chain alkylene having 1 to 10 carbon atoms, or a straight-chain or branched-chain alkenylene having 2 to 10 carbon atoms.

In some embodiments, R¹ may be a straight-chain alkylene having 1 to 10 carbon atoms. In some embodiments, R¹ may be a straight-chain alkylene having 1 to 5 carbon atoms.

The thiol compound including the above-described compounds may suppress an excessive increase in the thickness of the coating portion 110. Accordingly, an increase in the volume of the secondary battery may be suppressed, thereby improving energy density.

In some embodiments, the thiol compound may include a polymer monomer including a thiol group and a hydroxyl group.

In some embodiments, the coating portion 110 may include a polymer including a thiol group.

For example, the thiol compound may form a polymer-type coating portion 110 through a polymerization reaction of a monomer including a thiol as a side chain. For example, the coating portion 110 including a thiol group may be formed by introducing a portion of the thiol compound during a polymerization reaction of monomers that do not contain a thiol.

In one embodiment, the coating portion 110 may further include a thiol compound including a carboxyl group. For example, unreacted thiol compounds remaining during the formation of the cathode active material may be included in the coating portion 110.

According to exemplary embodiments, the coating portion 110 may have a thickness of 0.1 nm or more. In some embodiments, the coating portion 110 may have a thickness of 0.1 nm or more, 0.2 nm or more, 0.5 nm or more, 0.8 nm or more, 1.0 nm or more, or 1.5 nm or more.

According to exemplary embodiments, the coating portion 110 may have a thickness of 30 nm or less. In some embodiments, the coating portion 110 may have a thickness of 30 nm or less, 28 nm or less, 26 nm or less, 25 nm or less, 23 nm or less, 21 nm or less, or 20 nm or less.

For example, the coating portion 110 may have a thickness of 0.1 nm to 30 nm, 0.2 nm to 28 nm, 0.5 nm to 25 nm, 0.8 nm to 25 nm, 1.0 nm to 21 nm, or 1.5 nm to 20 nm.

Within the above range, deterioration of interfacial properties due to physical contact between the cathode active material and the electrolyte may be suppressed. In addition, an increase in resistance due to decomposition of the coating portion 110 may be suppressed.

According to exemplary embodiments, the cathode active material may be provided as a cathode active material for an all-solid-state battery.

As used herein, the term "all-solid-state battery" may refer to a battery that does not use a liquid electrolyte. The liquid electrolyte may refer to an electrolyte that is in a liquid phase at room temperature, and may include, for example, an electrolyte including a lithium salt (e.g., LiPF₆, LiClO₄, or LiBF₃) dissolved in an organic solvent such as dimethyl carbonate or diethyl carbonate.

The electrolyte of the all-solid-state battery may include a gel polymer electrolyte excluding organic liquid electrolytes and ionic liquid electrolytes, a polymer solid electrolyte, and an inorganic solid electrolyte.

The coating portion 110 of the cathode active material may maintain uniform interfacial contact with the solid electrolyte of the all-solid-state battery. For example, the thiol groups of the coating portion 110 and a sulfide-based solid electrolyte may maintain uniform contact through S-S bonding. Accordingly, decomposition of the solid electrolyte may be suppressed, thereby improving the cycle-life characteristics of the secondary battery.

FIG. 2 is a schematic cross-sectional view illustrating an electrode assembly according to exemplary embodiments.

Referring to FIG. 2, the electrode assembly may include a cathode 200 including the above-described cathode active material, an anode 230, and an electrolyte layer 240 interposed between the cathode 200 and the anode 230.

The cathode 200 may include the above-described cathode active material. For example, the cathode 200 may be a composite cathode including a conductive material, a solid electrolyte, and the like. For example, the cathode 200 may optionally further include a binder, a thickener, and the like.

For example, the cathode may be used in the form of a cathode active material or a composite cathode formed by pressurizing a mixture of the above-described cathode active material and a solid electrolyte.

The pressurization may be performed by a uniaxial flat plate press or by a triaxial isostatic press.

In some embodiments, the pressurization may be an isostatic press process, such as a warm isostatic press (WIP), a cold isostatic press (CIP), or a roll press process. The pressurization may be performed by a cold isostatic press (CIP) process, in which stress is applied uniformly in all directions compared to the flat plate press, thereby suppressing warpage of the composite cathode.

In some embodiments, the pressurization may be performed at a pressure of 200 MPa to 800 MPa for 10 seconds to 1 minute. Within the above range, a composite cathode in the form of a pellet having a density of 75% or more and high adhesion between the cathode active material and the solid electrolyte may be formed.

The conductive material may be added to enhance the electrical conductivity of the cathode by increasing the mobility of electrons. For example, the conductive material may include carbon-based conductive materials such as graphite, carbon black, acetylene black, Ketjen black, graphene, carbon nanotubes, vapor-grown carbon fibers (VGCFs), carbon fibers, and/or metal-based conductive materials, including perovskite materials, such as tin, tin oxide, titanium oxide, LaSrCoO₃, and LaSrMnO₃. In one embodiment, a carbon-based conductive material may be used as the conductive material.

The binder may include polytetrafluoroethylene (PTFE), polyvinylidenefluoride (PVDF), poly(vinylidene fluoride-co-hexafluoropropylene), polyacrylonitrile, polymethylmethacrylate, acrylonitrile-butadiene rubber (NBR), polybutadiene rubber (BR), styrene-butadiene rubber (SBR), and the like. In one embodiment, a PTFE-based binder may be used as the cathode binder.

As the thickener, for example, carboxymethyl cellulose (CMC) may be used.

The cathode 200 may be a composite cathode and may include a cathode current collector.

The cathode current collector may include, for example, stainless steel, nickel, aluminum, titanium, copper, or an alloy thereof, and preferably aluminum or an aluminum alloy.

The anode 230 may be used in the form of an anode active material or a composite anode formed by pressurizing a mixture of an anode active material and a solid electrolyte. The pressurization may be performed by the above-described uniaxial flat plate press or triaxial isostatic press.

As the anode active material, any active material known in the art may be used, so long as it is capable of intercalating and deintercalating lithium ions.

For example, carbon-based materials such as crystalline carbon, amorphous carbon, carbon composites, carbon fibers, etc., a lithium alloy, silicon, or tin may be used.

Examples of the amorphous carbon may include hard carbon, coke, mesocarbon microbeads (MCMBs) calcined at 1500 °C or lower, mesophase pitch-based carbon fibers (MPCFs) or the like.

Examples of the crystalline carbon may include graphite carbons such as natural graphite, graphitized coke, graphitized MCMBs, and graphitized MPCFs.

Alithium metal may include pure lithium metal or lithium metal having a protective layer formed thereon for suppressing dendrite growth, etc.

Elements included in the lithium alloy may include aluminum, zinc, bismuth, cadmium, antimony, silicon, lead, tin, gallium, or indium.

The anode 230 may be a composite anode and may include an anode current collector.

The anode current collector may include, for example, gold, stainless steel, nickel, aluminum, titanium, copper, or an alloy thereof, and preferably copper or a copper alloy.

The electrolyte layer 240 may include a solid electrolyte. The electrolyte layer 240 may serve as a separation membrane to prevent an electrical short circuit between the cathode 200 and the anode 230, and maintain the flow of ions. In this case, the secondary battery may be manufactured in the form of an all-solid-state battery.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

In some embodiments, the solid electrolytes included in the cathode 200, the anode 230 and the electrolyte layer 240 may include a sulfide-based electrolyte.

The sulfide-based electrolyte may maintain a uniform contact area with the coating portion 110 of the above-described cathode active material through S-S bonding. In addition, the sulfide-based electrolyte may suppress decomposition of the solid electrolyte, thereby improving the cycle life characteristics of the battery under high-temperature conditions.

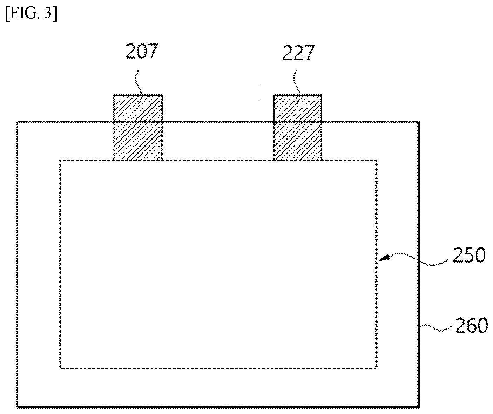

FIG. 3 is a schematic plan view illustrating a lithium secondary battery according to exemplary embodiments.

Referring to FIG. 3, an electrode assembly 250 may be accommodated in a case 260. Electrode tabs (cathode tabs and anode tabs) may protrude from the cathode current collector and anode current collector, respectively, which belong to the electrode assembly, and extend to one side of the case 260. The electrode tabs may be fused together with the one side of the case 260 to form electrode leads (a cathode lead 207 and an anode lead 227) that extend or are exposed to the outside of the case 260.

According to exemplary embodiments, an electrode cell may be defined by the cathode 200, the anode 230 and the electrolyte layer 240, and a plurality of electrode cells may be stacked to form, for example, a jelly roll type electrode assembly 250. For example, the electrode assembly 250 may be formed by winding, laminating, or folding the electrolyte layer 240.

The all-solid-state battery may be manufactured, for example, in a cylindrical shape (using a can), in a prismatic shape (using a can), in a pouch shape, or in a coin shape.

According to a method for manufacturing a cathode active material of the present disclosure, a mixture of lithium metal oxide particles, a thiol compound having a carboxyl group, and an acid may be prepared. The mixture may then be stirred.

The lithium metal oxide particles and the thiol compound may each represent the lithium metal oxide particles and the thiol compound according to the above-described embodiments.

Acid compounds known in the art may be used as the acid. Examples of the acid compound may include sulfuric acid, hydrochloric acid, nitric acid, acetic acid, citric acid, and the like.

In the mixture, the number of functional groups formed on the surface of the lithium metal oxide particles may increase.

According to exemplary embodiments, the mixture may include lithium metal oxide particles having hydroxyl groups formed on their surface.

For example, the lithium metal oxide particles may include hydroxyl groups formed by reaction with oxygen or moisture. In another example, the hydroxyl groups may be formed on the surface of the lithium metal oxide particles through dangling bonds resulting from coordination unsaturation.

The contents of the thiol compound and the acid may be controlled to coat the surface of the lithium metal oxide particles.

According to exemplary embodiments, the content of the thiol compound may be 0.1% by weight ("wt%") or more based on the total weight of the mixture. In some embodiments, the content of the thiol compound may be 0.15 wt% or more, 0.2 wt% or more, 0.25 wt% or more, 0.27 wt% or more, or 0.3 wt% or more based on the total weight of the mixture.

According to exemplary embodiments, the content of the thiol compound may be 5.0 wt% or less based on the total weight of the mixture. In some embodiments, the content of the thiol compound may be 4.8 wt% or less, 4.5 wt% or less, 4.3 wt% or less, 4.2 wt% or less, or 4.0 wt% or less based on the total weight of the mixture.

For example, the content of the thiol compound may be 0.1 wt% to 5.0 wt%, 0.2 wt% to 4.8 wt%, 0.25 wt% to 4.3 wt%, or 0.3 wt% to 4.0 wt% based on the total weight of the mixture.

Within the above range, the thickness of the coating portion may be controlled to further improve cycle life characteristics at high temperatures and/or high voltages. For example, if the content is less than the above range, regions where the coating portion is not formed may increase, thereby increasing interfacial resistance and deteriorating cycle life characteristics. Conversely, if the content exceeds the above range, the thiol compound may penetrate into the lithium metal oxide particles, thereby accelerating capacity degradation due to volume expansion.

According to exemplary embodiments, the content of the acid may be 0.01 wt% or more based on the total weight of the mixture. In some embodiments, the content of the acid may be 0.02 wt% or more, 0.03 wt% or more, 0.04 wt% or more, 0.045 wt% or more, or 0.05 wt% or more based on the total weight of the mixture.

According to exemplary embodiments, the content of the acid may be 2.0 wt% or less based on the total weight of the mixture. In some embodiments, the content of the acid may be 1.9 wt% or less, 1.8 wt% or less, 1.7 wt% or less, 1.6 wt% or less, or 1.5 wt% or less, 1.0 wt% or less based on the total weight of the mixture.

For example, the content of the acid may range from 0.01 wt% to 2.0 wt%, 0.02 wt% to 1.9 wt%, 0.03 wt% to 1.7 wt%, or 0.05 wt% to 1.5 wt%, or 0.05 wt% to 1.0 wt% based on the total weight of the mixture.

Within the above range, acid-mediated reactions may be activated on the surface of the lithium metal oxide particle, thereby enabling more uniform formation of the coating portion. For example, if the content is less than the above range, the thiol compound may aggregate in some regions or the region where the coating is not formed may increase. Conversely, if the content exceeds the above range, side reactions between the lithium metal oxide particle and the acid may occur.

According to exemplary embodiments, the weight ratio of the acid to the thiol compound may be 0.01 to 0.8, 0.02 to 0.6, or 0.03 to 0.5.

Within this range, the coating portion on the surface of the lithium metal oxide particle may be more uniformly formed.

According to exemplary embodiments, the preparation and stirring of the mixture may be performed at a temperature of 200 °C or lower. In some embodiments, the temperature during the preparation and stirring of the mixture may be 0 °C to 180 °C, 10 °C to 150°C, 15 °C to 100°C, or 20°C to 80 °C.

The coating portion may be formed under mild conditions, thereby facilitating the implementation of the designed cathode active material.

According to exemplary embodiments, the stirring may be performed for 1 to 24 hours, 2 to 18 hours, or 3 to 15 hours.

The preparation and stirring of the mixture may be performed in a solvent.

The solvent may be any known solvent, and ethyl alcohol, isopropyl alcohol, dimethyl sulfoxide, acetonitrile, dimethoxyethane, diethoxyethane, sulfolane, gamma-butyrolactone, and propylene sulfite may be used without limitation. The solvents may be used alone or in combination of two or more thereof.

The stirring method is not particularly limited, and may be performed using any known method, such as a mixer, hand mixing, or mechanical milling.

The mixture may be stirred and then dried. The solvent may be removed through drying.

According to exemplary embodiments, the drying may be performed under vacuum conditions. Vacuum drying may minimize changes in the composition of the cathode active material.

A cathode may be fabricated from the cathode active material. For example, the above-described cathode active material, a solid electrolyte, and a conductive material may be dry-mixed to prepare a preliminary composite cathode. The preliminary composite cathode may be pressurized to form a cathode. The cathode may exist in the form of a composite cathode.

In some embodiments, the preliminary composite cathode may include 50 to 99 wt% of the cathode active material, 1 to 40 wt% of the solid electrolyte, and 1 to 10 wt% of the conductive material, based on the total weight.

By fabricating the cathode in a dry process, the drying or purification steps otherwise required when using a solvent may be omitted, thereby improving manufacturing efficiency.

The invention is also defined by the following aspects:
Aspect 1. A cathode active material for a lithium secondary battery, comprising:
   lithium metal oxide particles; and
   a coating portion attached to a surface of the lithium metal oxide particles through a chemical bond and including a thiol group.
Aspect 2. The cathode active material for a lithium secondary battery according to aspect 1, wherein the chemical bond comprises an ester bond.
Aspect 3. The cathode active material for a lithium secondary battery according to any one of aspect 1 and 2, wherein the coating portion is derived from a thiol compound.
Aspect 4. The cathode active material for a lithium secondary battery according to aspect 3, wherein the thiol compound comprises at least one of thioglycolic acid, mercaptopropionic acid, mercaptobutyric acid, mercaptoundecanoic acid, mercaptosuccinic acid and cysteine.
Aspect 5. The cathode active material for a lithium secondary battery according to any one of aspect 3 and 4, wherein the thiol compound comprises a thiol group at one terminal and a carboxyl group at the other terminal.
Aspect 6. The cathode active material for a lithium secondary battery according to any one of aspect 3 to 5, wherein the thiol compound comprises a compound represented by Formula 1 below: 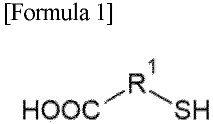 (in Formula 1, R¹ is a straight-chain or branched-chain alkylene having 1 to 10 carbon atoms, or a straight-chain or branched-chain alkenylene having 2 to 10 carbon atoms).
Aspect 7. The cathode active material for a lithium secondary battery according to any one of aspect 1 to 6, wherein the coating portion further comprises a thiol compound including a carboxyl group.
Aspect 8. The cathode active material for a lithium secondary battery according to any one of aspect 1 to 7, wherein the coating portion has a thickness of 0.1 nm to 30 nm.
Aspect 9. The cathode active material for a lithium secondary battery according to any one of aspect 1 to 8, wherein the lithium metal oxide particles comprise manganese, and the molar ratio of manganese to metal elements excluding lithium and oxygen is 0.5 or more.
Aspect 10. A lithium secondary battery comprising:
   a cathode comprising the cathode active material for a lithium secondary battery according to any one of aspect 1 to 9;
   an anode; and
   an all-solid-state electrolyte layer disposed between the cathode and the anode.
Aspect 11. A method for manufacturing a cathode active material for a lithium secondary battery, comprising:
   preparing a mixture of lithium metal oxide particles, a thiol compound including a carboxyl group, and an acid; and
   stirring the mixture.
Aspect 12. The method for manufacturing a cathode active material for a lithium secondary battery according to aspect 11, wherein the mixture comprises lithium metal oxide particles including hydroxyl groups formed on their surface.
Aspect 13. The method for manufacturing a cathode active material for a lithium secondary battery according to any one of aspect 11 and 12, wherein the content of the thiol compound is 0.1% by weight to 5.0% by weight based on the total weight of the mixture.
Aspect 14. The method for manufacturing a cathode active material for a lithium secondary battery according to any one of aspect 11 to 13, wherein the content of the acid is 0.01% by weight to 2.0% by weight based on the total weight of the mixture.
Aspect 15. The method for manufacturing a cathode active material for a lithium secondary battery according to any one of aspect 11 to 14, wherein the temperature of the step of stirring the mixture is 200 °C or lower.

### Example 1

### (1) Preparation of cathode active material

0.995 g of lithium metal oxide (Li_{1.2}Ni_{0.13}Co_{0.13}Mn_{0.54}O₂), 0.005 g of thioglycolic acid, and 0.001 g of citric acid were added to 60 mL of acetonitrile, followed by stirring at 60 °C for 5 hours. Thereafter, the solvent was removed by vacuum drying at room temperature to prepare a cathode active material.

### (2) Manufacture of cathode and secondary battery

The cathode active material, a sulfide-based solid electrolyte (Li₆PS₅Cl) as an electrolyte, and carbon nanofibers as a conductive material were mixed in a weight ratio of 60:35:5 to fabricate a cathode.

The cathode was attached to one surface of a sulfide-based solid electrolyte (Li₆PS₅Cl) serving as a separation membrane, and an indium-lithium (In-Li) alloy anode was attached to the opposite surface. The resulting assembly was pressurized to form a 13 mm pressed cell, which was then packaged in a case to manufacture a secondary battery.

### Example 2

A cathode active material, cathode, and secondary battery were manufactured in the same manner as in Example 1, except that the contents of lithium metal oxide and thioglycolic acid were changed to 0.99 g and 0.01 g, respectively.

### Example 3

A cathode active material, cathode, and secondary battery were manufactured in the same manner as in Example 1, except that 3-mercaptopropionic acid was used instead of thioglycolic acid.

### Example 4

A cathode active material, cathode, and secondary battery were manufactured in the same manner as in Example 1, except that 11-mercaptoundecanoic acid was used instead of thioglycolic acid.

### Comparative Example 1

A cathode active material, a cathode, and a secondary battery were manufactured in the same manner as in Example 1, except that thioglycolic acid and citric acid were omitted.

### Comparative Example 2

A cathode active material, a cathode, and a secondary battery were manufactured in the same manner as in Example 1, except that 1-propanethiol was used instead of thioglycolic acid.

### Comparative Example 3

A cathode active material, a cathode, and a secondary battery were manufactured in the same manner as in Example 1, except that propionic acid was used instead of thioglycolic acid.

### Comparative Example 4

A cathode active material, a cathode, and a secondary battery were manufactured in the same manner as in Example 1, except that poly(ethylene-co-acrylic acid) was used instead of thioglycolic acid.

### Comparative Example 5

0.98 g of lithium metal oxide (Li_{1.2}Ni_{0.13}Co_{0.13}Mn_{0.54}O₂), 0.001 g of lithium powder, and 40 µL of niobium (V) ethoxide (coating agent) were added to 60 mL of ethanol, followed by heat treatment at 350 °C for 3 hours to prepare a cathode active material.

A cathode and secondary battery were manufactured in the same manner as in Example 1 using the cathode active material.

### Experimental Example

### (1) Fourier transform infrared (FT-IR) analysis

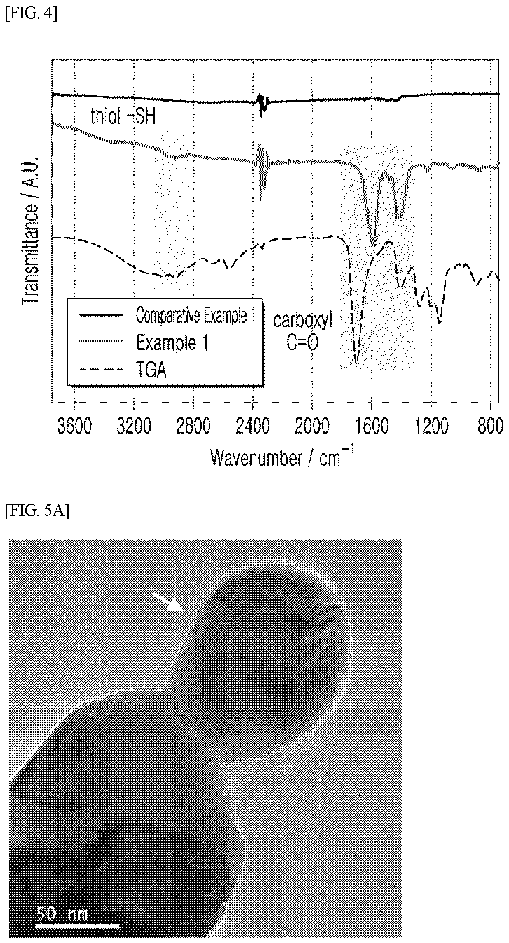

The IR spectra of the cathode active materials according to Example 1 and Comparative Example 1 were analyzed, and the results are shown in FIG. 4.

Referring to FIG. 4, S-H bonds and C=O bonds were observed in the IR spectrum of the cathode active material according to Example 1. In contrast, no S-H bonds or C=O bonds were observed in the IR spectrum of the cathode active material according to Comparative Example 1. Therefore, it was confirmed that a coating was formed on the cathode active material according to Example 1, whereas no coating was formed on the cathode active material according to Comparative Example 1.

### (2) Transmission electron microscopy (TEM) and energy dispersive x-ray spectroscopy (EDS) analysis

The cathode active materials according to the examples and comparative examples were analyzed using TEM and EDS to identify the elemental component and distribution on the surface of the cathode active materials. The presence or absence of a coating was determined from the elemental distribution in the images, and the evaluation results are shown in Table 1 below.
O: Coating formed on the surface of the cathode active material
X: Coating not formed on the surface of the cathode active material

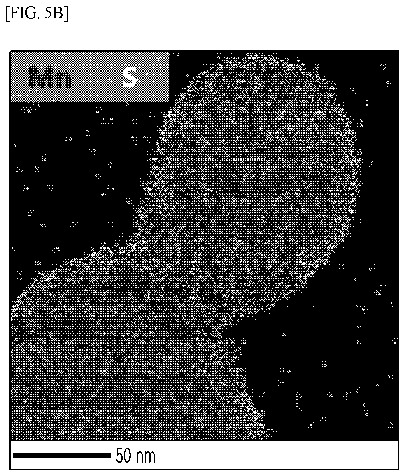

FIGS. 5A to 10A illustrate TEM images of the cathode active materials according to Example 1 and Comparative Examples 1 to 5, respectively. FIGS. 5B to 10B illustrate EDS analysis images of the cathode active materials according to Example 1 and Comparative Examples 1 to 5, respectively.

Referring to FIGS. 5A and 5B, sulfur atoms derived from thioglycolic acid were uniformly distributed on the surface of the cathode active material according to Example 1.

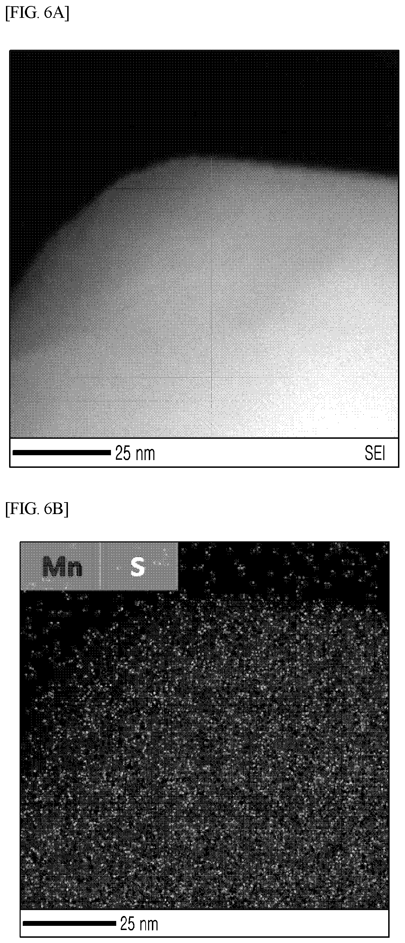

Referring to FIGS. 6A and 6B, no sulfur atoms were observed on the cathode active material according to Comparative Example 1, and no surface coating was formed.

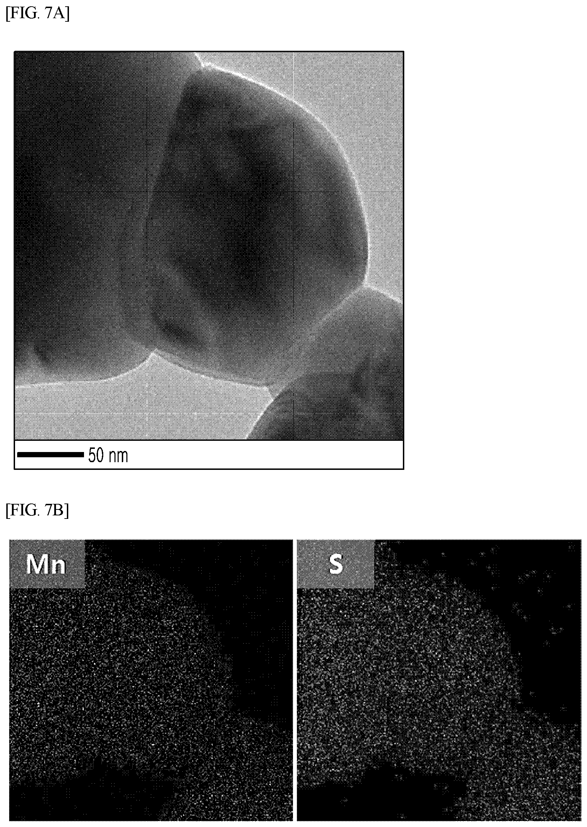

Referring to FIGS. 7A and 7B, for the cathode active material according to Comparative Example 2, no surface coating was formed because propanethiol does not contain a carboxyl group and thus could not form an ester bond with the hydroxyl groups on the surface of the cathode active material.

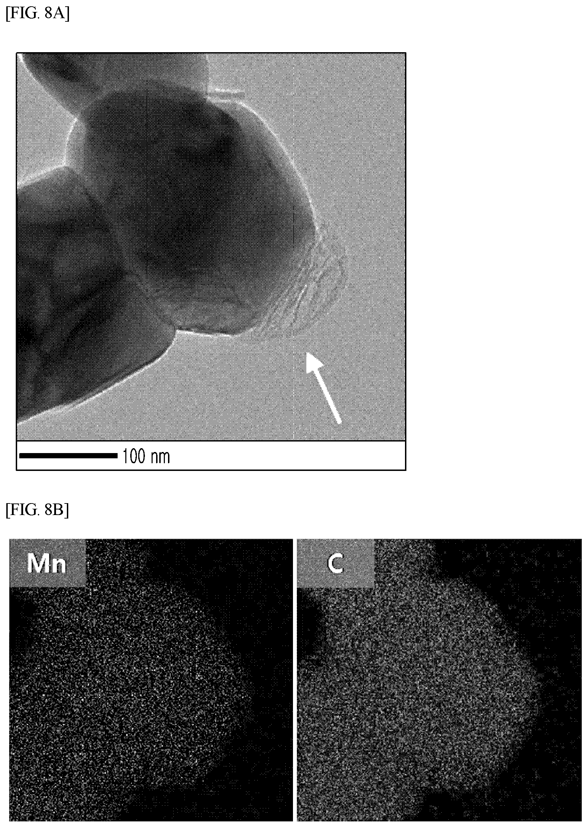

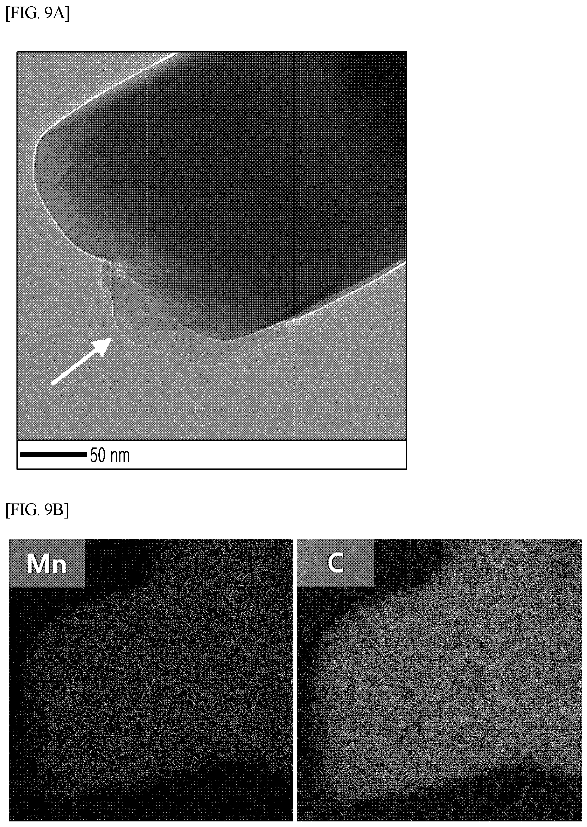

Referring to FIGS. 8A, 8B, 9A and 9B, the carbon atom distribution on the surface of the cathode active materials according to Comparative Examples 3 and 4 was observed, but it was not uniform.

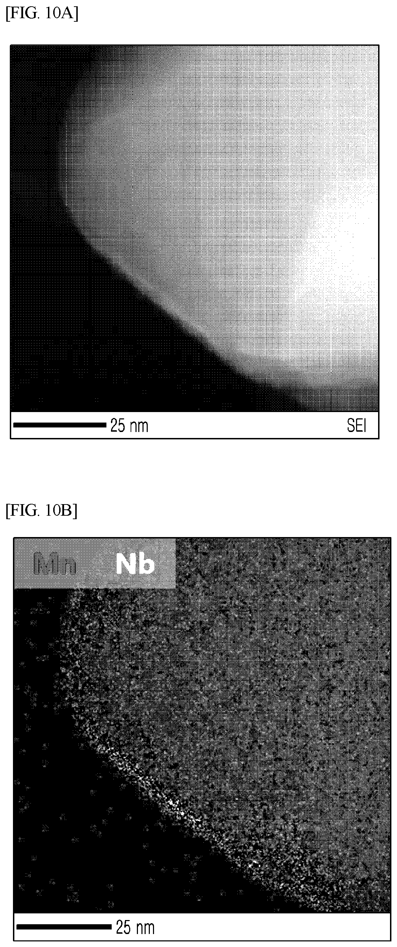

Referring to FIGS. 10A and 10B, for the cathode active material according to Comparative Example 5, which was coated using a conventional cathode active material coating method, a niobium-containing coating was formed on the surface, but the coating was not uniform.

### (3) Evaluation of cycle life characteristics

The cycle life characteristics of the secondary batteries manufactured according to the examples and comparative examples were evaluated. Specifically, during the formation process, five cycles of 0.05C CC/CV charging (4.6 V (vs. Li/Li⁺) 0.025C cut-off current) and 0.05C CC discharging (2.0 V (vs. Li/Li⁺)) were performed at 60 °C. Thereafter, the cycle life was measured by performing 0.5C CC/CV charging (4.6 V (vs. Li/Li⁺), 0.25C cut-off current) and 0.5C CC discharging (2.0 V (vs. Li/Li⁺)) as one cycle at 60 °C.

The cycle life characteristics were evaluated as the percentage obtained by dividing the discharge capacity at the 100th or 200th cycle by the discharge capacity after the formation process. The measurement results are shown in Table 1, and values with a capacity retention of less than 60% are not presented.

**[TABLE 1]**

| Classification | Coating | Initial capacity (mAhg⁻¹) | Capacity retention (%) | |
|---|---|---|---|---|
| | | | 100 cycles | 200 cycles |
| Example 1 | O | 254.9 | 97.1 | 94.6 |
| Example 2 | O | 257.0 | 91.8 | - |
| Example 3 | O | 257.7 | 95.9 | - |
| Example 4 | O | 227.6 | 86.2 | - |
| Comparative Example 1 | X | 267.5 | 97.5 | 71.3 |
| Comparative Example 2 | X | 257.7 | 80.2 | - |
| Comparative Example 3 | O | 242.0 | 85.0 | - |
| Comparative Example 4 | O | 223.0 | - | - |
| Comparative Example 5 | O | 267.8 | 88.2 | 66.3 |

As shown in Table 1, the secondary batteries according to the examples exhibited improved cycle life characteristics. Whereas, the secondary batteries according to the comparative examples exhibited degraded performance.

In Comparative Example 1, although the initial capacity retention was relatively good, the absence of a coating caused decomposition of the electrolyte layer by oxygen generated from the cathode as cycling progressed. Consequently, the reduced storage stability of the secondary battery led to a deterioration in cycle life characteristics.

In Comparative Example 2, despite using propanethiol, a thiol compound, no thiol-based coating was formed on the surface of the cathode active material, resulting in reduced cycle life characteristics.

In Comparative Examples 3 to 5, a coating was formed on the surface of the cathode active material. However, because it did not include a thiol compound, the cycle life characteristics of the secondary battery were degraded.

## Claims

1. A cathode active material for a lithium secondary battery, comprising:
lithium metal oxide particles; and
a coating portion attached to a surface of the lithium metal oxide particles through a chemical bond and including a thiol group.

2. The cathode active material for a lithium secondary battery according to claim 1, wherein the chemical bond comprises an ester bond.

3. The cathode active material for a lithium secondary battery according to any one of claims 1 and 2, wherein the coating portion is derived from a thiol compound.

4. The cathode active material for a lithium secondary battery according to claim 3, wherein the thiol compound comprises at least one of thioglycolic acid, mercaptopropionic acid, mercaptobutyric acid, mercaptoundecanoic acid, mercaptosuccinic acid and cysteine.

5. The cathode active material for a lithium secondary battery according to any one of claims 3 and 4, wherein the thiol compound comprises a thiol group at one terminal and a carboxyl group at the other terminal.

6. The cathode active material for a lithium secondary battery according to any one of claims 3 to 5, wherein the thiol compound comprises a compound represented by Formula 1 below: 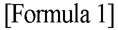 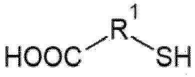 (in Formula 1, R¹ is a straight-chain or branched-chain alkylene having 1 to 10 carbon atoms, or a straight-chain or branched-chain alkenylene having 2 to 10 carbon atoms).

7. The cathode active material for a lithium secondary battery according to any one of claims 1 to 6, wherein the coating portion further comprises a thiol compound including a carboxyl group.

8. The cathode active material for a lithium secondary battery according to any one of claims 1 to 7, wherein the coating portion has a thickness of 0.1 nm to 30 nm.

9. The cathode active material for a lithium secondary battery according to any one of claims 1 to 8, wherein the lithium metal oxide particles comprise manganese, and the molar ratio of manganese to metal elements excluding lithium and oxygen is 0.5 or more.

10. A lithium secondary battery comprising:
a cathode comprising the cathode active material for a lithium secondary battery according to any one of claims 1 to 9;
an anode; and
an all-solid-state electrolyte layer disposed between the cathode and the anode.

11. A method for manufacturing a cathode active material for a lithium secondary battery, comprising:
preparing a mixture of lithium metal oxide particles, a thiol compound including a carboxyl group, and an acid; and
stirring the mixture.

12. The method for manufacturing a cathode active material for a lithium secondary battery according to claim 11, wherein the mixture comprises lithium metal oxide particles including hydroxyl groups formed on their surface.

13. The method for manufacturing a cathode active material for a lithium secondary battery according to any one of claims 11 and 12, wherein the content of the thiol compound is 0.1% by weight to 5.0% by weight based on the total weight of the mixture.

14. The method for manufacturing a cathode active material for a lithium secondary battery according to any one of claims 11 to 13, wherein the content of the acid is 0.01% by weight to 2.0% by weight based on the total weight of the mixture.

15. The method for manufacturing a cathode active material for a lithium secondary battery according to any one of claims 11 to 14, wherein the temperature of the step of stirring the mixture is 200 °C or lower.
